(19) Europäisches Patentamt

European Patent Office

Office européen des brevets

(11) **EP 2 600 070 B1**

(12) **EUROPEAN PATENT SPECIFICATION**

(45) Date of publication and mention
of the grant of the patent:
**27.05.2015 Bulletin 2015/22**

(21) Application number: **11009548.6**

(22) Date of filing: **02.12.2011**

(51) Int Cl.:
*C02F 1/46* *(2006.01)*  *C02F 1/72* *(2006.01)*
*C02F 5/00* *(2006.01)*  *F24D 19/00* *(2006.01)*
*F24H 4/04* *(2006.01)*

(54) **Scale inhibiting device, water heater and water consumptive apparatus**

Kalkverhinderungsvorrichtung, Warmwasserbereiter und Wasserverbrauchsvorrichtung

Dispositif de prévention de calcaire, chauffe-eau et appareil de consommation d'eau

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(43) Date of publication of application:
**05.06.2013 Bulletin 2013/23**

(73) Proprietors:
• **Mitsubishi Electric Corporation
Tokyo 100-8310 (JP)**
Designated Contracting States:
**AL AT BE BG CH CY CZ DE DK EE ES FI FR GR
HR HU IE IS IT LI LT LU LV MC MK MT NL NO PL
PT RO RS SE SI SK SM TR**
• **Mitsubishi Electric R&D Centre Europe B.V.
Livingston EH54 5DJ (GB)**
Designated Contracting States:
**GB**

(72) Inventor: **Noda, Seiji
Tokyo 100-8310 (JP)**

(74) Representative: **Pfenning, Meinig & Partner GbR
Patent- und Rechtsanwälte
Theresienhöhe 11a
80339 München (DE)**

(56) References cited:
**EP-A1- 2 397 789     JP-A- 3 170 747
US-A1- 2002 153 262     US-B1- 6 547 947**

# EP 2 600 070 B1

**Description**

BACKGROUND OF THE INVENTION

1. Field of the Invention:

The present invention relates to a water heater according to the preamble of claim 1.

2. Description of the Related Art:

The prior art EP 2 397 789 A1 discloses a scale deposition device and a water heater using such a scale deposition device which allow efficient deposition of a scale component dissolved in water so as to reduce adhesion of the scale to a heat-transfer channel. The water heater comprises: a scale deposition device including a tank, scale deposition means including an anode and a cathode provided in the tank so as to be opposed to each other, and a first power supply for applying a voltage between the anode and the cathode, the scale deposition means depositing a scale component dissolved in water retained in the tank; a heat-transfer channel provided at downstream of the scale deposition means, for guiding the water; and a heat source for heating the water by heat exchange in the heat-transfer channel, in which the scale deposition means includes oxygen-gas supplying/dissolving means for supplying an oxygen gas to a water feed pipe for feeding the water to the tank and dissolving the oxygen gas in the water.

Beyond that, the prior art JP 3 170 747 A discloses the following: A scale constituent in supply water flowing into a water pipe of a heat exchanger is deposited and educed in an electrode-type scale constituent deposition-educing device, and the scale constituent educed on the electrodes is exfoliated from the electrodes every time when the polarity is inverted. Accordingly, the scale constituent in the supply water is removed while the surfaces of the electrodes are so refreshed as to be fresh surfaces at all times. The scale constituent removed from the supply water is filtered by a filter and thus the supply water wherefrom the scale constituent is removed can be supplied to the water pipe of the heat exchanger.

This document discloses the preamble of claim 1.

Water heaters to supply hot water to a bath room and a kitchen are roughly divided into types of electric water heaters, gas water heaters, oil water heaters, and the like. Each type of these water heaters includes a component called a heat exchanger to transfer heat to water.

Recently, electric water heaters of a heat-pump heat exchanging type (i.e., heat-pump water heaters) are of particular interest among the electric water heaters from a viewpoint of $CO_2$ reduction for energy-saving and global warming countermeasures.

The heat-pump water heater operates on the principle that heat in the atmosphere is transferred to a heat medium to heat water with the transferred heat. More specifically, the heat-pump water heater is operated by a repeated operation (cooling-heating cycle) of transferring high heat, which is generated when a gas is compressed, to water through an intermediation of the heat exchanger, and then lowering the temperature of the heat medium back to an atmospheric temperature with cool air generated when the gas is expanded. Even though a larger amount of heat energy than that of input energy cannot be obtained in theory, a larger amount of heat energy than the amount of energy required for the operation can be used because the heat-pump water heater has a mechanism of using the heat in the atmosphere.

Since a heat exchanger transfers heat to water, it is extremely important to continuously keep a heat-transfer surface in a clean state. When the surface gets dirty, the effective heat-transfer area is decreased leading to a decrease in heat-transfer performance. When the dirt (such as for example scale) is further accumulated, a flow channel is obstructed in the worst case.

In particular, in a region where a large amount of hardness components (e.g., calcium ions, magnesium ions, ion-silica and molecular silica) are highly contained in tap water, there is a problem that inorganic compound salts of low solubility called scale are more likely to be stuck into a heat exchanger during heating.

To solve the above problems, the prior art describes a water heater in which means to generate a nucleus of a scale component is disposed in stage previous to the heat exchange stage, in which the heat exchanger is partially formed of a base material made of copper or copper alloy, and in which at least a surface of the base material which may come into contact with water during use is coated, see Japanese Patent Publication JP 2001-317817.

Here, when a voltage is applied to the electrodes, an ionization of water is promoted and hydrogen gas is generated owing to a reaction between hydrogen ions and electrons at the cathode side. As a result of this generation of hydrogen gas, the pH at the vicinity of the cathode is increased and a nucleus of calcium carbonate is generated through a reaction between a Ca ion and a carbonate ion dissolved in water.

Further, there is known a water processing apparatus with a scale inhibiting means intended to deposit hardness ingredients contained in water as scale which comprises a water-permeable porous filter element between a first electrode and a second electrode and to collect scale which is deposited on a surface of the filter element, see for example Japanese Patent Publication JP 2010-221102. Here, hydroxide ions (OH⁻) are generated at the cathode 220 and the filter element 230 which is located at the upstream side of a water-softening module. Since hydroxide ions are an extremely strong base, negatively charged surfaces of the electrode 220 and the filter element 230 are locally alkaline. Accordingly, hardness ingredients in electrolysis water are deposited.

In Japanese Patent Publication 2001-317817 and Japanese Patent Publication 2010-221102, in a case that scale particles of calcium carbonate are deposited due to the increasing pH at the vicinity of the cathode owing to water electrolysis, there has been a problem that combustible hydrogen gas is generated as a hydrogen generation reaction is progressed in accordance with the water electrolysis owing to a shortage of dissolved oxygen.

## SUMMARY OF THE INVENTION

It is therefore an object of the present invention to avoid or at least to reduce the generation of combustible hydrogen gas in accordance with water electrolysis while concurrently still reliably preventing a sticking of scale to the heat transfer passage.

This object is solved by a water heater according to claim 1, and a water consumptive apparatus according to claim 15. Advantageous embodiments of the present invention are described in the depending claims.

Hereinafter, the invention is firstly described in a general way; afterwards, specific embodiments are described in detail. The components shown in these specific embodiments do not have to be assembled exactly as shown in the specific embodiments, but can also, within the scope of the present invention be assembled in different ways. Especially, discrete components shown in the specific embodiments can also be omitted or combined in a way not shown in the embodiments 1 to 3 (for example, embodiment 2 can be combined with embodiment 1 by providing an oxygen supply pipe which is configured to discharge its oxygen inside the electrolysis tank in the immediate proximity, i.e. directly at the surface of an oxygen porous cathode separating the outer air and the water inside this tank).

In order to solve this above problems, the present invention provides a scale inhibiting device (which can be adapted to be used in conjunction with a water heater) with which sticking of scale for example to a subsequent heat exchanger is suppressed due to an efficient deposition of scale ingredients dissolved in water.

To address the above issues, a water heater according to claim 1 is provided.

According to the above structure, generation of combustible hydrogen gas in accordance with water electrolysis can be suppressed while scale sticking for example to a subsequent heat transfer passage can be reliably prevented.

According to an embodiment, the cathode of the scale inhibiting means can be formed of porous conductive material and can be placed so as to separate outer air and water in the electrolysis tank. Accordingly, the dissolution speed of oxygen is drastically increased and the generation of combustible hydrogen gas in accordance with the water electrolysis can be suppressed while scale sticking for example to a subsequent heat transfer passage can be reliably prevented.

## BRIEF DESCRIPTION OF THE DRAWINGS

FIG. 1 is a structural view illustrating a scale inhibiting device according to a first embodiment of the present invention in a water heater;
FIG. 2 is a structural view illustrating a scale inhibiting device according to a second embodiment of the present invention in a water heater;
FIG. 3 is a structural view illustrating a scale inhibiting device according to a third embodiment of the present invention in a water heater;
FIG. 4 is a table indicating a first and a second concrete example of the present invention and a comparison example; and
FIG. 5 is a table indicating three concrete examples of the present invention in comparison.

## DETAILED DESCRIPTION OF THE EMBODIMENTS

First embodiment:

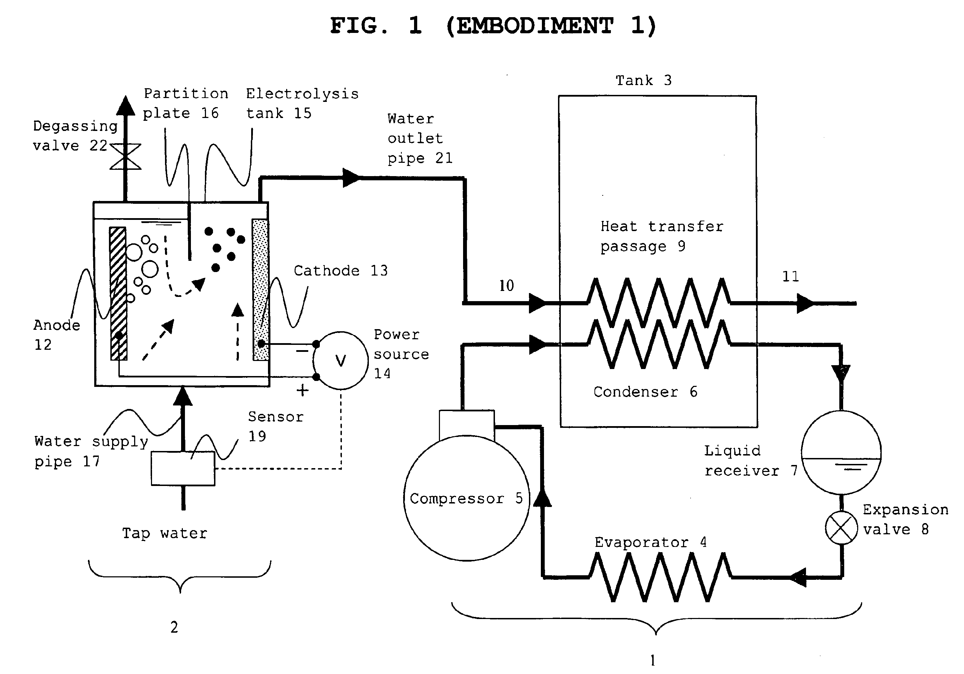

FIG. 1 is a schematic structural view illustrating a water heater with a scale inhibiting device (hereinafter: scale inhibiting means) according to a first embodiment of the present invention.

The water heater is provided with a water heater body 1 which heats water, the scale inhibiting means 2 which deposits scale ingredients contained in water to be fed to the water heater body 1, and a tank 3 which stores heated water.

The water heater main body 1 includes an evaporator 4 corresponding to an air-to-heat medium heat exchanger, for transferring heat of heated outside air to a heat medium, a compressor 5 for compressing the heat medium evaporated in the evaporator 4, a condenser 6 corresponding to a heat medium-to-water heat exchanger for heating water corresponding to a liquid to be heated with heat of the heat medium, which liquefies the heat medium, a liquid receiver 7 for retaining the heat medium from the condenser 6, and an expansion valve 8 for quickly adiabatically expanding the high-temperature high-pressure liquefied heat refrigerant from the liquid receiver 7. The above-mentioned components are connected sequentially to constitute a cooling-heating cycle or thermal cycle, respectively.

Water flows through the inside of the condenser 6 (which operates as a heat source) in parallel to the heat-medium to be liquefied in the condenser 6. In the condenser, a thermal contact occurs between the heat-medium and water at a heat transfer passage 9 through which the water to be heated (which is coming from the water outlet pipe 21 of the electrolysis tank 15, see below) passes.

The upstream side of the heat transfer passage 9 is connected to an inlet pipe 10 (which is connected to pipe 21) for water to be heated and the downstream side of the heat transfer passage 9 is connected to an outlet pipe 11 for the heated water to leave the condenser 6. Water flowing from the inlet pipe 10 to the outlet pipe 11 through the heat transfer passage 9 is heated as an heat exchange is performed against the heat-medium while passing through the heat transfer passage 9. The outlet pipe 11 is connected to hot-water discharge means (not illustrated) such as a water tap and/or a shower.

In FIG. 1, the condenser 6 is arranged inside the tank 3. However, it is also possible that heating is performed by circulating water with a pump (not illustrated) which is disposed for circulating water between the tank 3 and the condenser 6 when the condenser 6 is placed at a predetermined position outside the tank 3. Further, in a case that a required hot-water quantity at the hot-water discharge means downstream of pipe 11 is small, it is also possible that water is heated (not illustrated) in an once-through way at the heat transfer passage 9. In this case, the provision of the tank 3 is not necessary.

Here, the heat-medium flowing through the condenser 6 and the water flowing through the heat transfer passage 9 flow in parallel, i.e. in the same direction. However, it is also possible the heat-medium and water flow oppositely, i.e. that the arrangement is designed to form a countercurrent flow.

The scale inhibiting means 2 is provided with an electrolysis tank 15, an anode 12 and a cathode 13, which are arranged inside the tank 15 in an opposed manner, and a power source 14 the positive electrode of which is connected to the anode 12 and the negative electrode of which is connected to the cathode 13. Further, the scale inhibiting means 2 is provided with a partition plate 16 being arranged between the anode 12 and the cathode 13 and being attached to a ceiling of the tank 15, and a water supply pipe 17 which supplies water to the tank 15 (and leading into the tank 15 via its bottom).

As described later, oxygen gas generated on a surface of the anode 13 owing to oxidative decomposition of water can be discharged appropriately to the outside of the tank 15 by a degassing valve 22.

The partition plate 16 (having a length of a hundredth to four fifth of the total height of the tank 15) functions to prevent oxygen gas accumulated at the upper side of the anode 13 from escaping to the cathode 14 side along the ceiling of the tank 15.

The tank 15 is preferably made of a polymer resin material such as polyvinyl chloride or acrylic, or of a metal material such as stainless steel or aluminum.

Further, a flow sensor 19 (being a water-supply detection means) is attached to the water supply pipe 17 and is electrically connected to the power source 14. When water flows through the water supply pipe 17 and into the tank, the power source 14 is turned on owing to an electric signal from the flow sensor 19, so that a predetermined voltage is applied between the anode 12 and the cathode 13.

The anode 12 is constituted with an oxidative catalyst which promotes an oxidative reaction of water on a base material. A sintered material of a metallic fiber or a titanium expanded metal having a mesh structure is utilized for the base material. Specifically, it is possible to utilize a fabric (with a thickness of for example 300 $\mu$m) having a density of 200 g/cm$^2$ formed of a sintered material to which titanium (Ti) monofilament having a fiber diameter of 20 $\mu$m and a length of 50 to 100 mm is interlaced. The anode 12 is formed by plating the surface of the base material titanium with platinum (Pt) or iridium oxide (IrO$_2$) being the oxidative catalyst at a density of 0.1 to 5.0 mg/cm$^2$. Since the oxidative reaction of water progresses on the anode 12, it is preferable that a contacting area between water and the base material is large when expanded metal is utilized as the base material. Specifically, it is preferable to utilize an expanded metal having ten or more open holes per 2.54 cm (i.e. per one inch).

The cathode 13 constitutes a part of a wall of the tank 15 (this wall separating the outside of the tank 15 from the inside of the tank 15). A first side of the cathode 13 therefore faces the inside of the tank 15, whereas a second side of the cathode 13 being opposed to the first side faces the outside of the tank 15. The main body of the cathode 13 is arranged inside the tank 15. However, it is also possible to integrate the cathode in a side wall of the tank 15 in such a manner, that parts of the cathode are arranged inside the tank 15 and parts of the cathode are arranged outside the tank 15 (not shown here). This cathode 13 is constituted with a porous conductive base material having water repellency so that water is prevented from escaping when air outside the tank 15 and water inside the tank 15 are separated by the cathode 13 and promoting a reduction reaction of oxygen. In general, the porosity of the conductive base material of the cathode 13 can be in a range between 30% and 80% inclusive, preferably between 50% and 70% inclusive. However, also other porosity values are possible.

Sintered material of a metallic fiber such as titanium (Ti), expanded metal having a mesh structure, or carbon-based material can be utilized as the base material. Specifically, it is possible to utilize a titanium fabric (e.g. with a thickness of 300 $\mu$m) to which monofilaments having a fiber diameter of 20 $\mu$m and length of 50 to 100 mm have been interlaced as the metal fiber mesh structure base material. It is also possible to utilize a foamed titanium material of which the mean pore diameter is in a range between 10 $\mu$m and 100 $\mu$m and of which the porosity is between 5% to 40% as metallic sintered base material. It is also possible to utilize carbon fibers with a thickness of 200 $\mu$m (e.g. with a fiber diameter of 5 to 50 $\mu$m and with a void rate of 20 to 80%) as carbon-based base material.

The cathode 13 is formed by plating the surface of the base material with platinum, titanium, molybdenum, stainless steel, aluminum, copper, iron or tungsten as a reduction catalyst at a density of 0.1 to 5.0 mg/cm$^2$.

When a pressure of the outer air (i.e. the air outside the tank 15) and a pressure inside the electrolysis tank 15 are denoted by $P_1$ and $P_2$, respectively, the following relation is satisfied among an angle θ (in degrees) formed between the base material surface of the cathode 13 and an air-liquid interface, with y (in N/m) being the surface tension of water and with d (in m) being the pore diameter of the base material of the cathode 13:

$$P_1 - P_2 = -(2\gamma/d) \cdot \cos(\theta) \quad (1)$$

On the other hand, there is the following relation between a critical pressure difference $P_c$ and a contact angle $\theta_c$ with water in air (being a physical property value indicating a repellency degree of the base material):

$$P_c = -(2\gamma/d) \cdot \cos(\theta_c) \quad (2)$$

Therefore, a condition for water in the tank 15 being prevented from escaping when the outer air and the water are separated is as follows:

$$P_1-P_2 < P_c = -(2\gamma/d) \cdot \cos(\theta_c) \quad (3)$$

That is, the base material is required to be designed so that the repellency degree and the pore diameter of the cathode 13 satisfy expression (3) in accordance with the assumed operational conditions. Specifically, in a case of polytetrafluorethylene (Teflon) as a base material of which the contact angle $\theta_c$ is 106°, if the pressure difference $P_1$-$P_2$ is 20 kPa, the pore diameter is required to be 2 $\mu$m or smaller.

In a case that the pore diameter is difficult to be made sufficiently small so that sufficient repellency can hardly be obtained with the above base material (or the base material plated with a reduction catalyst), it is also possible to form the electrode with a porous layer of a base material (or of a base material plated with a reduction catalyst) parts of which (the parts of the base material layer of the cathode facing to the outer air side) are covered by another porous layer with water-repellent material which satisfies expression (3). For example, in a case of utilizing titanium sintered material having a pore diameter of 50 $\mu$m and an porosity of 20%, the critical pressure $P_c$ calculated from expression (3) is extremely small as being approximately 2 kPa. Thus, if the pore diameter can be reduced to 2 $\mu$m by covering a part of the outer-air side of the titanium sintered base material with Teflon, the critical pressure of 20 kPa can be obtained. Alternatively, if the difference pressure ($P_1$-$P_2$) between the pressure of the outer air and the pressure inside the electrolysis tank 15 has to be be 20 kPa, this can be attained by integrating into the cathode' s base material a Teflon sheet the pore diameter of which is in the order of 2 $\mu$m or by covering this base material on the outer air side of the titanium sintered material with such a Teflon sheet in order to secure the operation of the scale inhibiting device 2 without the occurrence of water leak.

The scale inhibiting means 2 cannot be unambiguously determined in size as the water flow quantity (in liter per time unit) may vary. Specifically, it is desirable to increase the current applied by the voltage between the electrodes 12,13, the volume of the tank 15, and the surface areas of the anode 12 and of the cathode 13 in proportion to the water flow quantity.

On the other hand, the current characteristics (current against applied voltage) varies dependent upon the quality (i.e. its electric conductivity) of the water as the medium existing between the electrodes and upon shape-related factors such as the inter electrode distance between the anode 12 and the cathode 13 and the electrode area.

When the inter electrode distance is 1 mm or shorter, a mutual interference occurs between the reaction at the vicinity of the cathode 13 and the reaction at the vicinity of the anode 12. Further, since the electric conductivity with normal tap water is low, a voltage of 40 V or higher is required to obtain the required processing capability when the inter electrode distance is 40 mm or longer. Owing to a then rapid corrosion of metal material utilized for the anode 12, it is not practically desirable to use 40 V or higher. Accordingly, it is preferable to design the inter electrode distance in the range between 1 mm and 40 mm inclusive.

Next, a mechanism to prevent scale sticking to the heat transfer passage 9 by the scale inhibiting means 2 and a mechanism to suppress hydrogen gas generation progressing in the scale inhibiting means 2 will be described in detail.

In the water heater having the above structure, water flows into the electrolysis tank 15 of the scale inhibiting means 2 via the water supply pipe 17. The water inflowing from the lower side of the anode 12 thereafter flows, from the anode 12, toward the cathode 13 and is then discharged from the upper side of the cathode 13 via the water outlet pipe 21.

In the tank 15, when a voltage is applied by the power source 14, oxygen is generated owing to the occurrence of water ionization at the anode 12 as indicated by the following expression (4)

$$2\,H_2O \rightleftarrows O_2 + 4H^+ + 4e^- \qquad (4)$$

in the case of a normal electrode potential $E_1$ of 1.229 V.

At the cathode 13, $OH^-$ ions are generated owing to a reaction among water, oxygen and electrons as indicated by the following expressions (5) and (6)

$$O_2 + 2H_2O + 4e^- \rightleftarrows 4OH^- \qquad (5)$$

in the case of a normal electrode potential $E_2$ of 0.401 V

$$O_2 + 2H_2O + 2e^- \rightleftarrows OH^- + HO_2^- \qquad (6)$$

in the case of a normal electrode potential $E_3$ being -0.065 V.

When the potential of the cathode 13 is further lowered, $OH^-$ ions are generated while concurrently, combustible hydrogen gas is generated through a reduction reaction of water as illustrated in the following expression (7)

$$2H_2O + 2e^- \rightleftarrows H_2 + 2OH^- \qquad (7)$$

in the case of a normal electrode potential $E_4$ of -0.828 V.

As a result of the $OH^-$ ions being generated due to the reduction reaction of expressions (5) to (7), the pH-value in the vicinity of the cathode 13 is increased. Accordingly, as indicated by the following expression (8), a nucleus of calcium carbonate is generated at the cathode 13 though a reaction between a Ca ion and an $HCO_3$ ion which are dissolved in water

$$Ca^{2+} + HCO_3^- + OH^- \rightarrow CaCO_3\downarrow + H_2O \qquad (8)$$

By setting the potential E of the cathode 13 to be $E_2$ V or lower and to be $E_4$ V or higher by controlling the voltage applied to the power source 14 accordingly, the reactions of expressions (5) and (6) can be selectively progressed (in comparison with the reaction according to equation (7)), so that the generation of hydrogen gas of expression (7) can be completely suppressed. However, from a practical viewpoint, it is required to supply more current by setting the above potential E to be $E_4$ or lower to accelerate the generation speed of the $OH^-$ ions. In such a case, when dissolved oxygen becomes insufficient (i.e. a shortage of free oxygen occurs), the reaction speeds of expressions (5) and (6) are extremely decreased and the generated amount of hydrogen gas is increased in comparison to the desired $OH^-$ ion generation.

In the present embodiment, the cathode of the scale inhibiting means is formed of a porous conductive material and is integrated into the tank 15 so as to separate the outer air and the water. Accordingly, when the dissolution speed of oxygen is drastically increased, the reactions of expressions (5) and (6) can be selectively progressed. Therefore, it is possible to suppress the generation of combustible hydrogen gas in accordance with the water electrolysis of expression (7).

When a nucleus of calcium carbonate is once generated by the scale inhibiting means, Ca ions and $HCO_3$ ions existing excessively in tap water become more likely to be deposited on a surface of the nucleus and the reaction of expression 8 is continuously progressed. That is, at positions in the electrolysis tank 15 other than the surface of the cathode 13 and at the inside of the water outlet pipe 21, Ca ion concentration and $HCO_3$ ion concentration in tap water are gradually decreased before reaching the heat transfer passage 9. As a result, the Ca ion concentration and the

HCO$_3$ ion concentration can be decreased to the level at which carbonate crystals (called scale) are not deposited even when the tap water is heated in the passage 9. Accordingly, it is possible to reliably prevent calcium carbonate from being generated at and from sticking to the surface of the heat transfer passage 9.

The scale inhibiting means 2 therefore generates nuclei of calcium carbonate in tap water. It is not desired that the generated nuclei are stuck to the cathode 13 due to the following. When a scale layer is formed based on nuclei sticking to the surface of the cathode 13, the electric resistance at the surface of the cathode 13 is increased since the scale itself is not conductive. Since the electric conductivity of tap water of normal water quality is low, there may be a case that a voltage of 40 V or higher is required for obtaining a required processing capability when a scale layer of 0.1 mm or thicker is formed. Since a corrosion of metal material utilized for the anode 12 advances rapidly at 40 V or higher, such high voltages are practically not desirable. Further, when nuclei of calcium carbonate are stuck to the surface of the cathode 13, the nucleus concentration in the tap water is decreased. Accordingly, the Ca ion concentration and the HCO$_3$ ion concentration in tap water cannot be sufficiently decreased before reaching the heat transfer passage 9.

Here, when calcium carbonate generated at the vicinity of the cathode 13 reaches the vicinity of the anode 12, the calcium carbonate is dissolved once again with the generated H$^+$ (compare expression (4)). Therefore, positions of the inlet 17 and of the outlet 21 of the water in the scale inhibiting means 2 or the tank 15, respectively, are selected in such a way and the geometric structure of the tank 15 is realized in such a way that a smooth water flow from the anode 12 to the cathode 13 (as indicated with a dotted line arrow in FIG. 1) is attained.

At the vicinity of the water outlet 21 of the tank 15 of the scale inhibiting means 2, the acid water generated at the vicinity of the anode 12 and the alkaline water including nuclei of CaCO$_3$ generated at the vicinity of the cathode 13 are mixed in order to be neutralized to neutral water.

When the staying time of water between the scale inhibiting means 2 and the tank 3 is too long, there is the problem that the nuclei with their main ingredient CaCO$_3$ generated by the scale inhibiting means 2 are dissolved once again, which is not desired.

To avoid this, it is only required that the staying time of tap water at the inside of the water outlet pipe 21 which is connected to the upper portion of the electrolysis tank 15 is restricted to be thousand seconds or shorter when the particle diameter of the generated scale nuclei is 1 $\mu$m or smaller and to be fifty thousand seconds or shorter when the particle diameter is in a range between 1 to 5 $\mu$m.

Second embodiment:

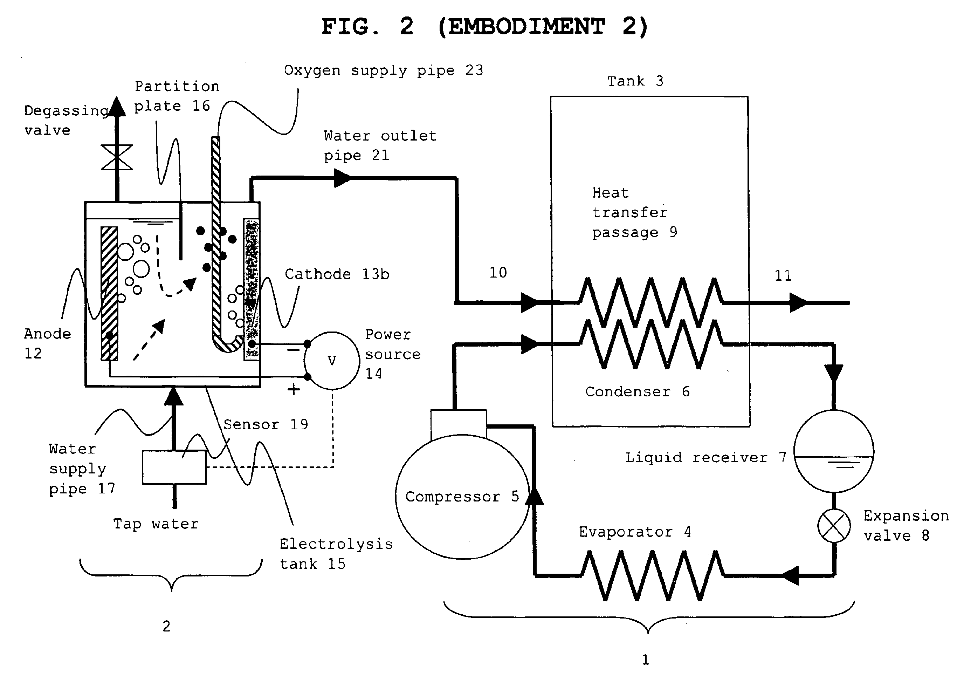

FIG. 2 is a schematic structural view illustrating a water heater with a scale inhibiting device according to the second embodiment of the present invention.

The second embodiment uses a conductive material 13b having a dense structure which is not air-permeable as the cathode material.

As basic material, a plate made of titanium (Ti), carbon or the like is used with a thickness which allows the material to be resistant to the pressure difference between the pressure of outer air and the pressure inside the electrolysis tank 15. For example, it is possible to utilize a titanium plate having a thickness being in the order of 0.1 to 10 mm. Alternatively, it is possible to utilize an airtight carbon plate having a thickness being in the order of 0.1 to 10 mm. Also in this embodiment, therefore, the cathode 13b forms parts of an outer wall of the tank 15.

Further, the surface of the base material of the cathode 13b is plated at the side which is contacted by the water in the electrolysis tank 15 with platinum, titanium, molybdenum, stainless steel, aluminum, copper, iron or tungsten as an reduction catalyst at a density of 0.1 to 5.0 mg/cm$^2$.

The scale inhibiting means 2 of the second embodiment is provided with an oxygen gas supply source (not illustrated) and an oxygen supply pipe 23 which supplies oxygen gas directly to the cathode 13b, i.e. discharges the oxygen gas immediately at the surface of the cathode 13b (the distance between the end of the pipe 23 proximal to the cathode 13b on the one hand and the surface the cathode 13b on the other hand can be equal to or smaller than 5 mm or even equal to or smaller than 2 mm). In order to realize this, the oxygen supply pipe 23 is conducted from the outside of the tank 15 (where it is connected to the oxygen gas supply source) via its upper ceiling into the inside of the tank 15 where it ends in the immediate proximity of an inner wall section of the cathode and directs the conveyed and released oxygen onto this wall section.

No outer air can flow directly into processing water through a porous conductive cathode in this embodiment. However, owing to the dissolution of oxygen gas in the immediate proximity of the inner surface of the cathode 13, it is nevertheless possible to promote a reduction reaction of oxygen (according to the above mentioned expressions (5) and (6)) at the surface of the cathode 13b.

The rest of the structure, its operation and its effects are the same as in the first embodiment.

Third embodiment:

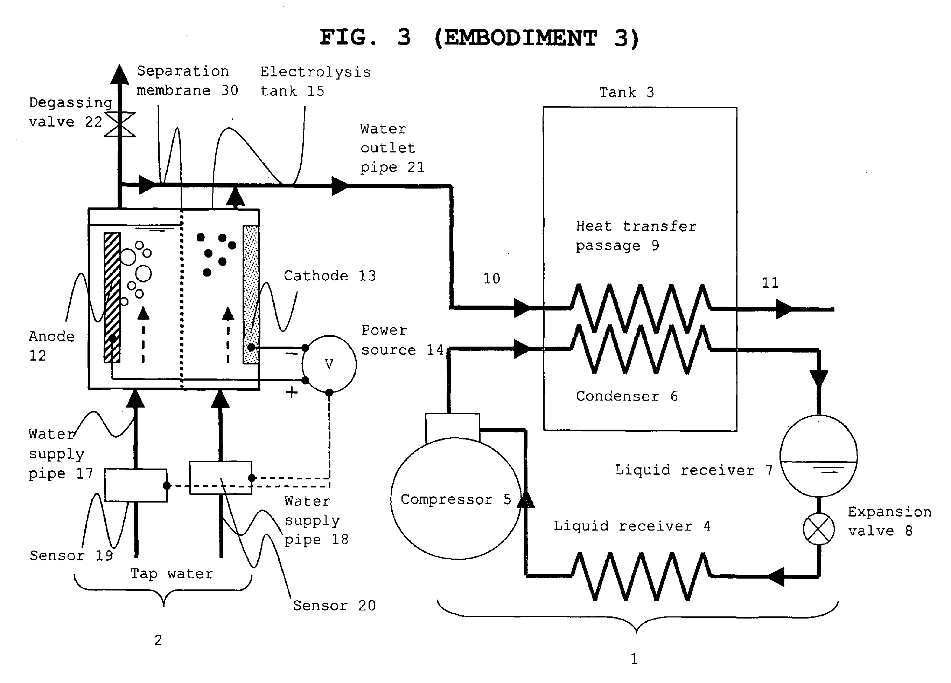

FIG. 3 is a schematic structural view illustrating a water heater with a scale inhibiting device 2 according to the third embodiment of the present invention.

In the third embodiment, the scale inhibiting means 2 is provided with a separating membrane 30 being permeable for water and hydrogen ions while blocking the passing of oxygen gas. The membrane 30 completely separates the anode 12 from the cathode 13 by dividing the inside of the tank 15 in two separate compartments, one anode compartment (left) and one cathode compartment (right). To realize this, the membrane 30 is provided in-between the anode 12 and the cathode 13 over the total height of the inside of the tank 15. There is one water supply pipe 17 disposed so as to supply water into the anode 12 side's compartment and one water supply pipe 18 is disposed so as to supply water into the cathode 13 side's compartment of the electrolysis tank 15. Further, flow sensors 19, 20 being water supply detection means are attached respectively to the water supply pipes 17, 18 and are electrically connected to the power source 14. When water flows through either the water supply pipe 17 or the water supply pipe 18 (or through both), the power source 14 is turned on based on an electric signal from the flow sensors and a predetermined voltage is applied between the anode 12 and the cathode 13.

A proton-conductive ion-exchange membrane, an anion-conductive ion-exchange membrane, a porous organic membrane, a porous inorganic membrane or the like is utilized for the separating membrane 30.

Specifically, a perfluoro-sulfonate membrane can be utilized as the separating membrane 30. It is only required that the material of the membrane conducts only water contents and hydrogen ions and blocks gaseous matters with electric insulation. Accordingly, it is also possible to alternatively utilize a polybenzimidazole based ion-exchange membrane, a polybenz-oxazole based ion-exchange membrane, a polyarylane-ether based ion-exchange membrane or the like.

The water heater of the third embodiment has the advantage that no mutual interference between the reaction at the vicinity of the cathode 13 and the reaction at the vicinity of the anode 12 occurs. Accordingly, compared to the first embodiment without the separating membrane 30, it is advantageous in that the adoptable range of the inter electrode distance is wider and that a water-flow control at the vicinity of the electrodes is not required.

In the present embodiment, like in the first embodiment, the cathode of the scale inhibiting means 2 is made of a porous conductive material and is placed so as to separate the outer air and the water. Accordingly, as the dissolution speed of oxygen is drastically increased, the reactions of expressions (5) and (6) can be selectively progressed. Therefore, it is possible to suppress the generation of combustible hydrogen gas in accordance with the water electrolysis (compare expression (7)).

Acid water generated at the vicinity of the anode 12 is mixed with alkali water including nuclei of $CaCO_3$ generated at the vicinity of the cathode 13 after flowing out of the tank 15 of the scale inhibiting means 2. This is realized by each of the two compartments having a water outlet at an upper part of the respective compartment. The two water outlets are then joined together and connected to one single water outlet pipe 21 being connected with the inlet pipe 10. When the staying time of water between the scale inhibiting means 2 and the tank 3 is too long, the nuclei of with their main ingredients $CaCO_3$ being generated by the scale inhibiting means 2 will be dissolved once again.

In order to avoid this, it is only required that the staying time of the tap water inside the water outlet pipe 21 which is connected to the upper portion of the electrolysis tank 15 is less than a thousand seconds when the particle diameter of the generated scale nuclei is 1 $\mu$m or smaller and is less than fifty thousand seconds when the particle diameter is in a range between 1 to 5 $\mu$m.

The rest of the structure, its operation and its effects are the same as for the first embodiment.

Comparison examples:

Next, regarding the water heaters of the first to the third embodiment, examples of the attained scale sticking prevention effects at the heat transfer passage 9 of the water heater body 1 will be described.

Specifically, comparisons are performed with respect to the scale generation quantity in solution by means of the scale inhibiting means 2, the progression rates of hydrogen gas generation (i.e. expression (7)) among electrochemical reactions (i.e. expressions (5) to (7)) at the cathode 13, and the thickness of the scale formed in the heat transfer passage 9 after having performed the operation of the water heaters in correspondence with a ten-year's use under normal conditions.

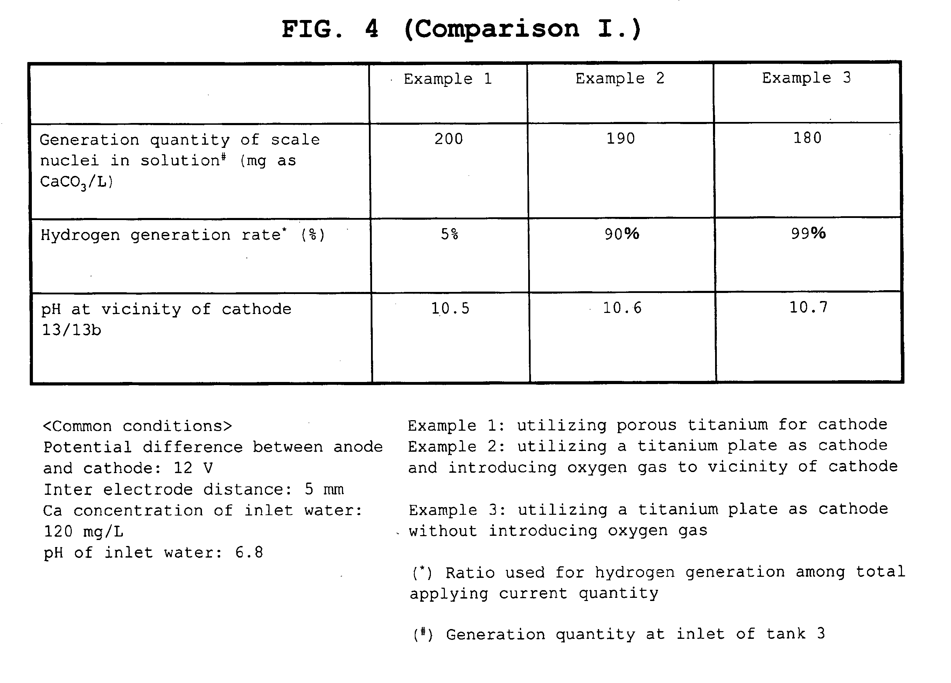

Comparison I. (fig. 4):

A scale sticking prevention effect or inhibiting effect, respectively, will be described when tap water is processed and the scale inhibiting means 2 and the power source 14 are operated under the later-mentioned conditions by utilizing the water heater and its scale inhibiting device of the first and of the second embodiment.

Conditions of the scale inhibiting means 2 were set as electrode area being 1 dm$^2$, voltage being 12 V, inter electrode distance being 5 mm, and volume of the tank 15 being 0.5 L. The length of the partition plate 16 was set to be a fifth of the total height of the tank 15.

The anode 12 was formed of a fabric having a thickness of 300 $\mu$m and a density of 200 g/cm$^2$ and being a sintered material to which monofilaments having a fiber diameter of 20 $\mu$m and a length of 500 mm were interlaced. A plate processing was performed on the surface of the base material with iridium oxide (IrO$_2$) being the oxidative catalyst at a density of 1.0 mg/cm$^2$.

In Example 1, the cathode 13 was formed of a fabric having a thickness of 300 $\mu$m and a density of 200 g/cm$^2$ and being a sintered material to which titanium monofilaments having a fiber diameter of 20 $\mu$m and a length of 500 mm was interlaced. A plate processing was performed on the surface of this base material with platinum at a density of 1.0 mg/cm$^2$ Further, a Teflon sheet with a pore diameter in the order of 5 $\mu$m was included in the base material on the outer-air side of the cathode 13. Alternatively, another cathode 13 based on foamed titanium base material with a pore diameter of 100 $\mu$m and with a porosity of 30% can be used as the base material. A plate processing was performed on the surface of the base material with platinum at a density of 1.0 mg/cm$^2$. Further, a Teflon sheet with a pore diameter in the order of 5 $\mu$m was integrated into the base material with on the outer-air side of the cathode 13.

The above piping 17, 15, 21, 10, 9 and 11 was designed so that a staying time of the tap water within the water outlet pipe 21 being connected to the upper portion of the electrolysis tank 15 was in the order of 500 seconds.

The tap water had a Ca$^{2+}$ concentration of 120 mg/L, an alkalinity of 200 mg/L, a pH of 6.8 and dissolved oxygen in a concentration of 5 mg/L and was supplied to the tank 15 at a flow rate of 100 ml/min through the water supply pipe 17. A current flowed constantly at 1.0 A when a direct voltage of 12 V was applied via the power source 14.

The aforementioned conditions of Example 1 are only one example of the parameters which can be used in the first embodiment and are not limiting the operational conditions to obtain the main advantages of the present invention by operating the first embodiment.

Further, as a comparison example (Example 2) against Example 1, a scale sticking prevention effect was examined in a case that oxygen gas was supplied to the cathode 13b formed of conductive material having a dense structure which is not air-permeable in accordance with embodiment 2. The anode 12 was formed of the same material and had the same area as the anode of example 1. The cathode 13b was formed by performing plate processing on a titanium plate having a thickness of 1 mm with platinum of a density of 1.0 mg/cm$^2$. Further, oxygen gas was supplied directly to the surface of the cathode 13 at a rate of 0 to 5 L/min through the oxygen supply pipe 23. The oxygen gas was dispersed in bubbles in a size of between 0.01 and 5 mm by a dispersal plate located at the end of the oxygen supply pipe 23 proximal to the cathode 13 (not illustrated). The results of examples 1 and 2 are indicated in FIG. 4.

With the scale inhibiting means 2 described in the first embodiment, the dissolved Ca$^{2+}$ concentration was decreased from 120 mg/L to 40 mg/L by applying a direct voltage of 12V. Scale particles were generated in the solution as being equivalent to 200 mg/L of calcium carbonate. This is equivalent to 80 mg/L of Ca$^{2+}$ as being matched to Ca$^{2+}$ concentration disappeared from the solution. That is, it is considered that the Ca$^{2+}$ concentration was decreased as scale particles (with the main ingredient CaCO$_3$) were deposited in the vicinity of the cathode 13. A solution extracted from the vicinity of the cathode 13 was measured to be alkaline with a pH value of 10.5.

Further, slight hydrogen gas generation by the surface of the cathode 13 was recognized. Owing to the generated quantity of hydrogen gas, the current amount consumed in the above reaction of expression (7) was proved to be 0.05 A. Since the total current amount flowing between the anode 12 and the cathode 13 was 1.0 A, the generation efficiency of hydrogen gas was 5%.

Next, in Example 2 with the scale inhibiting means 2 of the second embodiment, scale particles were generated in the solution as being equivalent to 180 to 190 mg/L of calcium carbonate when a direct voltage of 12 V was applied. A Solution in the vicinity of the cathode 13 was measured to be alkaline with a pH value between 10.6 and 10.7. The generation efficiencies for hydrogen gas were varying with the flow rate of oxygen gas. The efficiency was 99% when oxygen gas supply was stopped in the arrangement of the second embodiment (compare Example 3 in fig. 4) and was 90% when the oxygen gas supply quantity was 1 L/min or more in the arrangement of the second embodiment (compare Example 2 in fig. 4).

In case of an oxygen gas supply quantity of 1 L/min or more, a distribution of electrolytes between the anode and the cathode was disturbed due to the bubbles of the supplied oxygen. Accordingly, applying the current became unstable even though a constant direct voltage was applied.

One can therefore see that the first embodiment is more effective than the second embodiment regarding the oxygen supply means for the cathode and that, even if also the second embodiment already allows to decrease the quantity of hydrogen gas generated per unit applied current, the first embodiment provides a remarkably better suppression for the generation of hydrogen gas generated per unit applied current.

According to the present invention, the cathode of the scale inhibiting means 2 is formed of porous conductive material in the first embodiment and is placed so as to separate outer air and water in the electrolysis tank. Accordingly, the dissolution speed of the oxygen is drastically increased and the generation of combustible hydrogen gas in accordance with water electrolysis can be suppressed while a scale sticking to the heat transfer passage 9 can be reliably prevented.

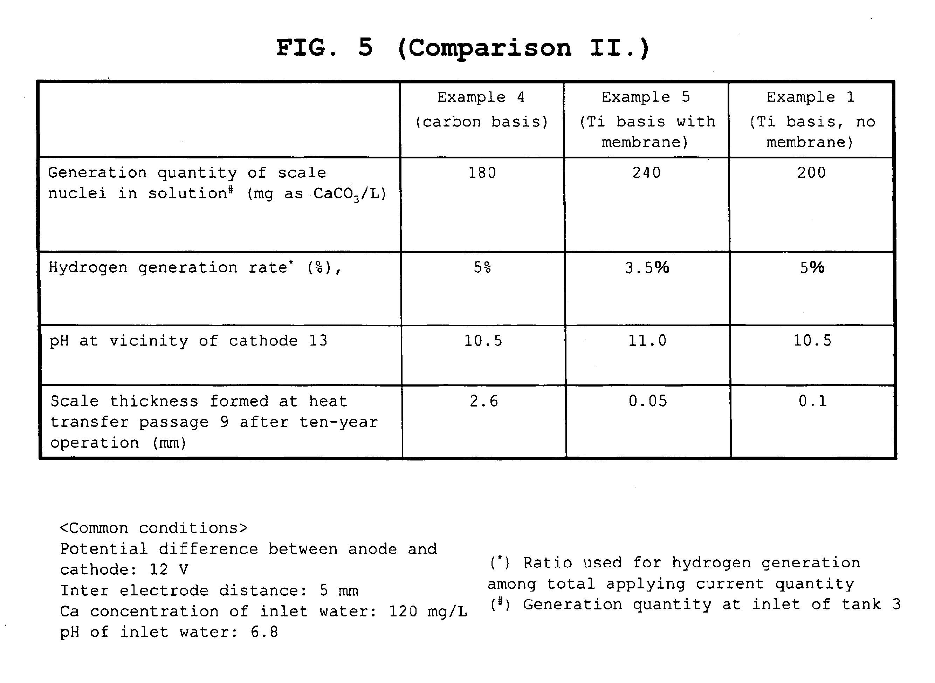

Comparison II. (fig. 5):

A scale sticking prevention effect will be described in three examples (Example 1 as above, Example 4 and Example 5, compare fig. 5) in accordance with embodiment 1, i.e. by processing tap water by operating the scale inhibiting means 2 and the power source 14 under the later-mentioned conditions by utilizing the water heater of the first embodiment.

In Example 4, the cathode 13 was formed of a fabric having a thickness of 300 $\mu$m and a density of 200 g/cm$^2$ and being a sintered material to which carbon monofilaments having a fiber diameter of 20 $\mu$m and a length of 500 mm have been interlaced. A plate processing was performed on the surface of this base material with platinum at a density of 1.0 mg/cm$^2$. Further, a Teflon sheet having a pore diameter in the order of 5 $\mu$m was integrated in this base material on the outer-air side of the cathode 13.

The tap water had a $Ca^{2+}$ concentration of 120 mg/L, an alkalinity of 200 mg/L, a pH of 6.8, and a dissolved oxygen concentration of 5 mg/L and was supplied to the tank 15 at a flow rate of 100 ml/min through the water supply pipe 17. A current flowed constantly at 1.0 A by applying a direct voltage of 12 V.

These conditions are only an example of control parameters for the first embodiment and are not limiting the operational conditions for this embodiment on order to obtain the main advantages of the present invention by operating an arrangement according to the first embodiment.

The base material of the cathode 13 of Example 4 therefore differs from that of Example 1; the other conditions remain the same. The result of Comparison II. is indicated in FIG. 5. With the scale inhibiting means 2 described in the first embodiment, the dissolved $Ca^{2+}$ concentration was decreased from 120 mg/L to 48 mg/L by applying a direct voltage of 12V. Scale particles were generated in the solution as being equivalent to 180 mg/L of calcium carbonate. This is equivalent to 72 mg/L of $Ca^{2+}$ as being matched to $Ca^{2+}$ concentration disappeared from the solution. That is, it is considered that the $Ca^{2+}$ concentration was decreased as scale particles with main ingredients $CaCO_3$ were deposited in the vicinity of the cathode 13. A solution extracted from the vicinity of the cathode 13 was measured to be alkaline with a pH value of 10.5.

Further, slight hydrogen gas generation was recognized at the surface of the cathode 13. Owing to the generated quantity of hydrogen gas, the current amount consumed in the above reaction of expression (7) was proved to be 0.05 A. Since the total current amount flowing between the anode 12 and the cathode 13 was 1.0 A, the generation efficiency of hydrogen gas was 5%.

Next, in Examples 1 and 4, a comparison was performed on the scale thickness formed at the walls in the heat transfer passage 9 after performing an operation of the water heaters corresponding to Examples 1 and 4 in accordance with a ten-year's use under normal conditions. The result is indicated in FIG. 5. The scale thickness was 0.1 mm in Example 1 and 2.6 mm in example 4. It is known that a scale layer of 3 mm is formed due to an operation corresponding to a ten-year's use when the power source 14 of the scale inhibiting means 2 is turned off. That is, the scale sticking prevention effect remained only at 14% in Example 4 while the effect reached 96% in Example 1.

Further, based on a detailed examination of the cathodes 13 of Examples 1 and 4, it was could be proved that a large amount of scale particles were stuck onto the carbon-made base material (Example 4) while only few particles were recognized on the titanium-made base material (Example 1).

Beyond this, the current value (when a direct voltage of 12 V was applied) stayed almost at the same during the operation time in Example 1. In contrast to this, in Example 4, this value was gradually decreased to 30% to 40% after an operation corresponding to a ten-year's use when compared to an initial current value being defined as 100%.

It is assumed that the above is caused, in the case of Example 4, by a decrease of oxygen gas supply speed due to the fact that scale particles (i.e. the nuclei) being generated at the scale inhibiting means 2 were stuck to the cathode 13 and by a decrease of the resulting applied current due to an ohmic loss due to an increase of the electric resistance of the cathode 13.

The scale inhibiting means 2 generates nuclei of calcium carbonate in tap water and avoids a sticking of the generated nuclei onto the cathode 13. This has the advantage that the following is avoided: When a scale layer is formed when nuclei stick to the surface of the cathode 13, the electric resistance at the surface of the cathode 13 is increased since the scale itself is not electrically conductive. Further, when nuclei of calcium carbonate are stuck to the surface of the cathode 13, the nucleus concentration in tap water is relatively decreased. Accordingly, the Ca ion concentration and the $HCO_3$ ion concentration in tap water cannot be sufficiently decreased in the piping until the heat transfer passage 9 is reached.

As described above, it was proved that the carbon base material of Example 4 caused a gradual progression of scale particle's sticking in accordance with a long-term operation regardless of the similar initial performance compared to that of Example 1.

According to the present embodiment, the cathode 13 of the scale inhibiting means 2 in accordance with Examples 1 and 4 is formed of a porous conductive material and is placed so as to separate outer air and water in the electrolysis tank. Accordingly, the dissolution speed of oxygen is drastically increased and the generation of combustible hydrogen gas in accordance with water electrolysis can be at least reduced (Example 4) or practically suppressed (Example 1) while scale sticking to the heat transfer passage 9 can be reliably prevented.

Additionally, a scale sticking prevention effect will now be described with respect to the Example 5 (compare fig. 5) in which tap water is processed by operating the scale inhibiting means 2 and the power source 14 under the later-mentioned conditions and in accordance with the water heater of embodiment 3, i.e. with an additional separating membrane 30.

The cathode 13 was formed of a fabric having a thickness of 300 $\mu$m and a density of 200 g/cm$^2$ and being a sintered material to which titanium monofilaments having a fiber diameter of 20 $\mu$m and a length of 500 mm were interlaced. A plate processing was performed on the surface of the base material with platinum at a density of 1.0 mg/cm$^2$. Further, a permeable Teflon sheet with a pore diameter in the order of 5 $\mu$m was integrated on the outer-air side of the base material of the cathode 13.

The separating membrane 30 was formed of a material conductive selectively for hydrogen ions, having a thickness of 140 $\mu$m and being constituted with perfluoro-sulfonate.

The tap water had a $Ca^{2+}$ concentration of 120 mg/L, an alkalinity of 200 mg/L, a pH of 6.8 and a dissolved oxygen concentration of 5 mg/L was supplied to the tank 15 at a flow rate of 100 ml/min through the water supply pipe 17. A current flowed constantly at 1.0 A by applying a direct voltage of 12 V.

The above conditions are only examples of control parameters for the third embodiment and are not limiting the operational conditions for this embodiment in order to obtain the main advantages of the present invention when operating the third embodiment. The rest of the control parameters were the same as in Example 1. The results of Example 5 are indicated in FIG. 5.

With the scale inhibiting means described in the third embodiment, the dissolved $Ca^{2+}$ concentration was decreased from 120 mg/L to 24 mg/L by applying the direct voltage of 12 V. Scale particles were generated in the solution as being equivalent to 240 mg/L of calcium carbonate. This is equivalent to 96 mg/L of $Ca^{2+}$ as being matched to $Ca^{2+}$ concentration disappeared from the solution. That is, it is considered that the $Ca^{2+}$ concentration was decreased as scale particles with main component $CaCO_3$ were deposited in the vicinity of the cathode 13. A solution extracted from the vicinity of the cathode 13 was determined to be alkaline with a pH value of 11.0.

Further, a slight hydrogen gas generation was recognized at the surface of the cathode 13. Owing to the generated quantity of hydrogen gas, the current amount consumed in the above reaction of expression (7) was proved to be 0.035 A. Since the total current amount flowing between the anode 12 and the cathode 13 was 1.0 A, the generation efficiency of hydrogen gas was 3.5%.

Next, similar to Examples 1 and 4, a comparison was performed for Example 5 on the scale thickness formed at the heat transfer passage 9 after performing an operation of the water heater corresponding to a ten-year's use under normal conditions. The result is indicated in FIG. 5. The scale thickness was 0.05 mm in Example 5.

According to the present embodiment, the cathode of the scale inhibiting means 2 can be formed of a porous conductive material and can be designed so as to separate outer air and water by being arranged at least partly in the electrolysis tank or by being arranged as part of the outer casing or shell of this tank. Accordingly, a dissolution speed of oxygen is drastically increased and a generation of combustible hydrogen gas in accordance with the water electrolysis can be suppressed while a scale sticking to the heat transfer passage can be reliably prevented.

LIST OF REFERENCE SIGNS

| | |
|---|---|
| 1 | Water heater body |
| 2 | Scale inhibiting means |
| 3 | Tank for storing heated water |
| 4 | Evaporator |
| 5 | Compressor |
| 6 | Condenser |
| 7 | Liquid receiver |
| 8 | Expansion valve |
| 9 | Heat transfer passage |
| 10 | Inlet pipe |
| 11 | Outlet pipe |
| 12 | Anode |
| 13 | Porous Cathode |

13b    Non-Porous Cathode
14    Power source
15    Electrolysis tank
16    Partition plate
17    $1^{st}$ Water supply pipe
18    $2^{nd}$ Water supply pipe
19    $1^{st}$ Sensor
20    $2^{nd}$ Sensor
21    Water outlet pipe
22    Degassing valve
23    Oxygen supply pipe
30    Separation membrane

**Claims**

1. A water heater comprising
a scale inhibiting device (2) which is configured to deposit scale ingredients dissolved in water in an electrolysis tank, the scale inhibiting device (2) comprising:

   the electrolysis tank (15);
   an anode (12) and a cathode, wherein the anode (12) and at least a part of the cathode are arranged in the tank (15)
   a power source (14) configured to apply a voltage between the anode (12) and the cathode: and wherein the water heater further comprises: a heat source which is configured to transfer heat to the water flowing out of the scale inhibiting device (2), **characterized in that** it comprises an oxygen gas supply means (13, 13b, 23) for supplying oxygen gas to be dissolved into water in the tank (15), wherein the oxygen gas supply means (13, 13b, 23) is designed to introduce oxygen gas into the tank (15) in the immediate proximity of the cathode and/or through the cathode; and **in that** the anode (12) and at least part of the cathode are arranged in an opposed manner.

2. The water heater with the scale inhibiting device (2) according to the preceding claim,
wherein at least part of the cathode is formed as or comprises a permeable body (13), preferably a porous and/or a meshed body, which is configured to allow a through flow of the oxygen gas so as to constitute at least part of the oxygen gas supply means (13, 13b, 23).

3. The water heater with the scale inhibiting device (2) according to the preceding claim,
wherein the permeable body (13) of the cathode is configured to let the oxygen gas flow through from air outside the tank (15) into the tank (15) while concurrently inhibiting the through flow of the water in the tank (15) to the outside of the tank (15) and/or is configured to separate the water in the tank (15) and outer air.

4. The water heater with the scale inhibiting device (2) according to one of the two preceding claims,
wherein the permeable body (13) of the cathode is configured to let the oxygen gas flow through from air outside the tank (15) into the tank (15) via a pressure difference $P_1$-$P_2$ between a pressure $P_1$ outside the tank (15) and a pressure $P_2$ inside the tank (15)
or
wherein the oxygen gas supply means (13, 13b, 23) is configured to actively press, preferably by means of a pump, the oxygen gas through the permeable body (13) and into the tank (15).

5. The water heater with the scale inhibiting device (2) according to one of the three preceding claims,
wherein the permeable body (13) is designed to be water repellent and/or has a pore size so as to be water repellent and/or
wherein the permeable body (13) is covered by and/or integrates, preferably at a side of a contact of the cathode with air outside the tank (15), a porous material, especially polytetrafluorethylene, having a pore size so as to be water repellent.

6. The water heater with the scale inhibiting device (2) according to one of the four preceding claims,
wherein the permeable body (13) comprises a conductive base material, preferably a sintered material or a mesh structure of metallic fibers, which supports and/or is plated by a catalyst material being configured to promote the reduction of oxygen.

7. The water heater with the scale inhibiting device (2) according to the preceding claim,
wherein the conductive base material and/or the catalyst material is/are designed to be water repellent and/or has/have a pore size so as to be water repellent
and/or
wherein the conductive base material and/or the catalyst material is/are covered by and/or integrates/integrate, preferably at a side of a contact of the cathode with air outside the tank (15), a porous material, especially polytetrafluorethylene, having a pore size so as to be water repellent.

8. The water heater with the scale inhibiting device (2) according to one of the six preceding claims,
wherein a sintered material comprising titanium fibers or a titanium expanded metal having a mesh structure is utilized as the permeable body (13) of the cathode and/or the conductive base material thereof.

9. The water heater with the scale inhibiting device (2) according to one of the preceding claims,
wherein the oxygen gas supply means (13, 13b, 23) for supplying oxygen gas to be dissolved into the water in the tank (15) comprises an oxygen supply pipe (23) configured to be connected to an oxygen gas source at its one end and to release the oxygen gas resulting from the oxygen gas source at its other end in the immediate proximity of the cathode.

10. The water heater with the scale inhibiting device (2) according to one of the preceding claims,
wherein a partition element, especially a partition plate (16), is disposed between the anode (12) and the cathode at an upper portion of the tank (15) so as to prevent the oxygen gas from flowing from the anode side to the cathode side along this upper portion.

11. The water heater with the scale inhibiting device (2) according to one of the preceding claims,
wherein a water supply pipe (17) configured to discharge the water into the tank (15) and a water outlet pipe (21) configured to discharge the water from the tank (15) to the outside thereof are connected to the tank (15) in such a way and/or wherein the tank (15) is shaped in such a way that, in the tank (15), the water flows from the anode side to the cathode side.

12. The water heater with the scale inhibiting device (2) according to one of the preceding claims,
wherein a separating membrane (30) which is permeable for the water and for hydrogen ions but impermeable for the oxygen gas is disposed between the anode (12) and the cathode.

13. The water heater with the scale inhibiting device (2) according to one of the preceding claims,
wherein at least one water flow detection means (19, 20), especially a flow sensor or a pressure sensor, for detecting whether or not there is a flow of water into the tank (15) via at least one water supply pipe (17, 18) is electrically connected to the power source (14) and is configured to turn on the power source (14) for applying a voltage between the anode (12) and the cathode only while there is a flow of water into the tank (15).

14. The water heater with the scale inhibiting device (2) according to one of the preceding claims,
wherein the heat source is a heat transfer passage (9) being arranged on the downstream side of the scale inhibiting device (2).

15. A water consumptive apparatus, especially an air-to-water heating pump, a water-to-water heating pump, a boiler, a washing machine or a dishwasher, comprising a water heater according to one of the preceding claims.

**Patentansprüche**

1. Ein Warmwasserbereiter umfassend
eine Ablagerungshemmeinrichtung (2), die ausgebildet ist zum Ablagern von Ablagerungsbestandteilen, die in Wasser gelöst sind, in einem Elektrolysebehälter, wobei die Ablagerungshemmeinrichtung (2) umfasst:

Den Elektrolysebehälter (15);
eine Anode (12) und eine Kathode, wobei die Anode (12) und zumindest ein Teil der Kathode in dem Behälter (15) angeordnet sind;

eine Stromquelle (14), die ausgebildet ist zum Anlegen einer Spannung zwischen der Anode (12) und der Kathode; und

wobei der Warmwasserbereiter darüberhinaus umfasst:

Eine Heizquelle, die ausgebildet ist zum Übertragen von Wärme an das Wasser, das aus der Ablagerungshemmeinrichtung (2) herausfließt,

**dadurch gekennzeichnet, dass**

die Ablagerungshemmeinrichtung (2) ein Sauerstoffgas-Versorgungsmittel (13, 13b, 23) zum Bereitstellen von Sauerstoffgas, das in Wasser in dem Behälter (15) zu lösen ist, umfasst, wobei das Sauerstoffgas-Versorgungsmittel (13, 13b, 23) ausgebildet ist zum Zuführen von Sauerstoffgas in den Behälter (15) in der unmittelbaren Nähe der Kathode und/oder durch die Kathode; und

dass die Anode (12) und zumindest ein Teil der Kathode gegenüber liegend angeordnet sind.

2. Der Warmwasserbereiter mit der Ablagerungshemmeinrichtung (2) gemäß des vorhergehenden Anspruchs, wobei zumindest ein Teil der Kathode als ein permeabler Körper (13) ausgeformt ist oder einen solchen (13) umfasst, vorzugsweise einen porösen und/oder einen netzartigen Körper (13), wobei der permeable Körper (13) ausgebildet ist, um einen Durchfluss des Sauerstoffgases zu erlauben, um zumindest einen Teil des Sauerstoffgas-Versorgungsmittels (13, 13b, 23) darzustellen.

3. Der Warmwasserbereiter mit der Ablagerungshemmeinrichtung (2) gemäß des vorhergehenden Anspruchs, wobei der permeable Körper (13) der Kathode ausgebildet ist, um das Sauerstoffgas von Luft außerhalb des Behälters (15) in den Behälter (15) hinein durchfließen zu lassen, während er (13) gleichzeitig den Durchfluss des Wassers in dem Behälter (15) nach außerhalb des Behälters (15) hemmt, und/oder ausgebildet ist zum Trennen des Wassers in dem Behälter (15) und der Luft außerhalb.

4. Der Warmwasserbereiter mit der Ablagerungshemmeinrichtung (2) gemäß einem der zwei vorhergehenden Ansprüche,

wobei der permeable Körper (13) der Kathode ausgebildet ist, um das Sauerstoffgas durchfließen zu lassen von Luft außerhalb des Behälters (15) in den Behälter (15) hinein durch eine Druckdifferenz $P_1$-$P_2$ zwischen einem Druck $P_1$ außerhalb des Behälters (15) und einem Druck $P_2$ innerhalb des Behälters (15)

oder

wobei das Sauerstoffgas-Versorgungsmittel (13, 13b, 23) ausgebildet ist zum aktiven Drücken, vorzugsweise vermittels einer Pumpe, des Sauerstoffgases durch den permeablen Körper (13) und in den Behälter (15) hinein.

5. Der Warmwasserbereiter mit der Ablagerungshemmeinrichtung (2) gemäß einem der drei vorhergehenden Ansprüche,

wobei der permeable Körper (13) wasserabweisend ausgebildet ist und/oder eine Porengröße aufweist, die ihn wasserabweisend macht,

und/oder

wobei der permeable Körper (13) bedeckt ist durch ein poröses Material und/oder ein poröses Material integriert, vorzugsweise auf einer Seite eines Kontakts der Kathode mit Luft außerhalb des Behälters (15), wobei das poröse Material, vorzugsweise Polytetrafluorethylen, eine Porengröße aufweist, die es wasserabweisend macht.

6. Der Warmwasserbereiter mit der Ablagerungshemmeinrichtung (2) gemäß einem der vier vorhergehenden Ansprüche,

wobei der permeable Körper (13) ein leitfähiges Basismaterial, vorzugsweise ein gesintertes Material oder eine Netzstruktur von metallischen Fasern, aufweist, das ein Katalysatormaterial trägt und/oder mit einem Katalysatormaterial überzogen ist, wobei das Katalysatormaterial ausgebildet ist, um die Reduktion von Sauerstoff zu fördern.

7. Der Warmwasserbereiter mit der Ablagerungshemmeinrichtung (2) gemäß des vorhergehenden Anspruchs, wobei das leitfähige Basismaterial und/oder das Katalysatormaterial ausgebildet ist/sind, um wasserabweisend zu sein, und/oder eine Porengröße aufweist/aufweisen, die es/sie wasserabweisend macht/machen,

und/oder

wobei das leitfähige Basismaterial und/oder das Katalysatormaterial mit einem porösen Material bedeckt ist/sind und/oder ein poröses Material integriert/integrieren, vorzugsweise auf einer Seite eines Kontakt der Kathode mit Luft außerhalb des Behälters (15), wobei das poröse Material, vorzugsweise Polytetrafluorethylen, eine Porengröße aufweist, die es wasserabweisend macht.

8. Der Warmwasserbereiter mit der Ablagerungshemmeinrichtung (2) gemäß einem der sechs vorhergehenden Ansprüche,
wobei ein gesintertes Material umfassend Titanfasern oder ein titanexpandiertes Metall aufweisend eine Netzstruktur als der permeable Körper (13) der Kathode und/oder das leitfähige Basismaterial davon verwendet ist.

9. Der Warmwasserbereiter mit der Ablagerungshemmeinrichtung (2) gemäß einem der vorhergehenden Ansprüche, wobei das Sauerstoffgas-Versorgungsmittel (13, 13b, 23) zum Bereitstellen von in dem Wasser in dem Behälter (15) zu lösenden Sauerstoffgas eine Sauerstoffversorgungsleitung (23) umfasst, die ausgebildet ist, um an ihrem einen Ende mit einer Sauerstoffgas-Quelle verbunden zu werden, und um das von der Sauerstoffgas-Quelle resultierende Sauerstoffgas an ihrem anderen Ende in der unmittelbaren Nähe der Kathode abzugeben.

10. Der Warmwasserbereiter mit der Ablagerungshemmeinrichtung (2) gemäß einem der vorhergehenden Ansprüche, wobei ein Trennelement, vorzugsweise eine Trennplatte (16), zwischen der Anode (12) und der Kathode an einem oberen Teil des Behälters (15) angeordnet ist, um zu verhindern, dass das Sauerstoffgas von der Anodenseite zu der Kathodenseite entlang dieses oberen Teils fließt.

11. Der Warmwasserbereiter mit der Ablagerungshemmeinrichtung (2) gemäß einem der vorhergehenden Ansprüche, wobei eine Wasserversorgungsleitung (17), die ausgebildet ist zum Abgeben des Wassers in den Behälter (15) hinein, und eine Wasserauslassleitung (21), die ausgebildet ist zum Abführen des Wassers aus dem Behälter (15) nach außen, mit dem Behälter (15) dergestalt verbunden sind und/oder wobei der Behälter (15) dergestalt ausgeformt ist, dass das Wasser in dem Behälter (15) von der Anodenseite zu der Kathodenseite fließt.

12. Der Warmwasserbereiter mit der Ablagerungshemmeinrichtung (2) gemäß einem der vorhergehenden Ansprüche, wobei eine Separiermembran (30), die für das Wasser und für Wasserstoffionen permeabel ist, aber für das Sauerstoffgas nicht permeabel ist, zwischen der Anode (12) und der Kathode angeordnet ist.

13. Der Warmwasserbereiter mit der Ablagerungshemmeinrichtung (2) gemäß einem der vorhergehenden Ansprüche, wobei zumindest ein Wasserfluss-Erfassungsmittel (19, 20), vorzugsweise ein Durchflusssensor oder ein Drucksensor, zum Erfassen, ob es einen Wasserfluss in den Behälter (15) hinein über zumindest eine Wasserversorgungsleitung (17, 18) gibt oder nicht, elektrisch mit der Stromquelle (14) verbunden ist und dazu ausgebildet ist, die Stromquelle (14) zum Anlegen einer Spannung zwischen der Anode (12) und der Kathode lediglich dann anzuschalten, wenn es einen Fluss von Wasser in den Behälter (15) hinein gibt.

14. Der Warmwasserbereiter mit der Ablagerungshemmeinrichtung (2) gemäß einem der vorhergehenden Ansprüche, wobei die Heizquelle eine Wärmeübertragungspassage (9) ist, die auf der stromabwärtigen Seite der Ablagerungshemmeinrichtung (2) angeordnet ist.

15. Eine wasserverbrauchende Vorrichtung, vorzugsweise eine Luft-zu-Wasser-Wärmepumpe, eine Wasser-zu-Wasser-Wärmepumpe, ein Boiler, eine Waschmaschine oder eine Geschirrspülmaschine, umfassend einen Warmwasserbereiter gemäß einem der vorhergehenden Ansprüche.

**Revendications**

1. Dispositif de chauffage de l'eau comprenant :

un dispositif antitartre (2) qui est configuré de façon à faire déposer des matières de tartre dissoutes dans l'eau dans un réservoir d'électrolyse, le dispositif antitartre (2) comprenant :

le réservoir d'électrolyse (15) ;
une anode (12) et une cathode, dans lequel l'anode (12) et une partie au moins de la cathode sont agencées dans le réservoir (15) ;
une source d'alimentation (14) configurée de façon à appliquer une tension entre l'anode (12) et la cathode ; et
dans lequel le dispositif de chauffage de l'eau comprend en outre :

une source de chaleur qui est configurée de façon à transférer de la chaleur à l'eau qui s'écoule hors du dispositif antitartre (2) ;

**caractérisé en ce qu'**il comprend des moyens d'approvisionnement en gaz oxygène (13, 13b, 23) destinés à fournir du gaz oxygène qui doit être dissous dans l'eau contenue dans le réservoir (15), dans lequel les moyens d'approvisionnement en gaz oxygène (13, 13b, 23) sont conçus de façon à introduire le gaz oxygène dans le réservoir (15) à proximité immédiate de la cathode ou à travers la cathode ; et

**en ce que** l'anode (12) et une partie au moins de la cathode sont agencées d'une façon opposée.

2. Dispositif de chauffage de l'eau doté d'un dispositif antitartre (2) selon la revendication précédente, dans lequel une partie au moins de la cathode est formée en tant qu'un corps perméable (13), ou comprend un corps perméable (13), de préférence un corps poreux ou maillé, qui est configuré de façon à permettre un écoulement du gaz oxygène afin de constituer une partie au moins des moyens d'approvisionnement en gaz oxygène (13, 13b, 23).

3. Dispositif de chauffage de l'eau doté d'un dispositif antitartre (2) selon la revendication précédente, dans lequel le corps perméable (13) de la cathode est configuré de façon à laisser passer le gaz oxygène en provenance de l'air qui est à l'extérieur du réservoir (15) dans le réservoir (15), tout en empêchant simultanément l'écoulement de l'eau contenue dans le réservoir (15) à l'extérieur du réservoir (15), ou il est configuré de façon à séparer l'eau contenue dans le réservoir (15) et l'air extérieur.

4. Dispositif de chauffage de l'eau doté d'un dispositif antitartre (2) selon l'une quelconque des deux revendications précédentes, dans lequel le corps perméable (13) de la cathode est configuré de façon à laisser passer le gaz oxygène en provenance de l'air qui est à l'extérieur du réservoir (15) dans le réservoir (15) par l'intermédiaire d'une différence de pression $P_1 - P_2$ entre la pression $P_1$ qui règne à l'extérieur du réservoir (15) et la pression $P_2$ qui règne à l'intérieur du réservoir (15) ; ou dans lequel les moyens d'approvisionnement en gaz oxygène (13, 13b, 23) sont configurés de façon à forcer de manière active, de préférence au moyen d'une pompe, le gaz oxygène à passer à travers le corps perméable (13) et dans le réservoir (15).

5. Dispositif de chauffage de l'eau doté d'un dispositif antitartre (2) selon l'une quelconque des trois revendications précédentes, dans lequel le corps perméable (13) est conçu de façon à être un produit hydrofuge ou présente une taille.de pore qui lui permet d'être un produit hydrofuge ; ou dans lequel le corps perméable (13) est recouvert par, ou intègre, de préférence au niveau d'un côté de la cathode qui est en contact avec l'air qui se situe en dehors du réservoir (15), un matériau poreux, en particulier du polytétrafluoroéthylène, qui présente une taille de pore qui lui permet d'être un produit hydrofuge.

6. Dispositif de chauffage de l'eau doté d'un dispositif antitartre (2) selon l'une quelconque des quatre revendications précédentes, dans lequel le corps perméable (13) comprend un matériau de base conducteur, de préférence un matériau fritté ou une structure maillée de fibres métalliques, qui supporte un matériau de catalyseur ou est recouvert de celui-ci, configuré de façon à favoriser la réduction de l'oxygène.

7. Dispositif de chauffage de l'eau doté d'un dispositif antitartre (2) selon la revendication précédente, dans lequel le matériau de base conducteur ou le matériau de catalyseur sont conçus de façon à être des produits hydrofuges, ou présentent une taille de pore qui leur permet d'être des produits hydrofuges ; ou dans lequel le matériau de base conducteur ou le matériau de catalyseur sont recouverts par, ou intègrent, de préférence au niveau d'un côté de la cathode qui est en contact avec l'air qui se situe en dehors du réservoir (15), un matériau poreux, en particulier du polytétrafluoroéthylène, qui présente une taille de pore qui lui permet d'être un produit hydrofuge.

8. Dispositif de chauffage de l'eau doté d'un dispositif antitartre (2) selon l'une quelconque des six revendications précédentes, dans lequel un matériau fritté qui comprend des fibres de titane ou un métal expansé de titane qui présente une structure maillée, est utilisé en tant que corps perméable (13) de la cathode ou que matériau de base conducteur de celui-ci.

**9.** Dispositif de chauffage de l'eau doté d'un dispositif antitartre (2) selon l'une quelconque des revendications précédentes,

dans lequel les moyens d'approvisionnement en gaz oxygène (13, 12b, 23) destinés à fournir le gaz oxygène qui doit être dissous dans l'eau contenue dans le réservoir (15), comprennent un tuyau d'approvisionnement en oxygène (23) configuré de façon à être connecté à une source de gaz oxygène au niveau de l'une de ses extrémités, et à libérer le gaz oxygène qui provient de la source de gaz oxygène au niveau de son autre extrémité à proximité immédiate de la cathode.

**10.** Dispositif de chauffage de l'eau doté d'un dispositif antitartre (2) selon l'une quelconque des revendications précédentes,

dans lequel un élément de séparation, en particulier une plaque de séparation (16), est disposé entre l'anode (12) et la cathode au niveau d'une partie supérieure du réservoir (15) de façon à empêcher le gaz oxygène de s'écouler à partir du côté anode vers le côté cathode le long de cette partie supérieure.

**11.** Dispositif de chauffage de l'eau doté d'un dispositif antitartre (2) selon l'une quelconque des revendications précédentes,

dans lequel un tuyau d'approvisionnement en eau (17) configuré de façon à évacuer l'eau contenue dans le réservoir (15), et un tuyau de sortie de l'eau (21) configuré de façon à évacuer l'eau du réservoir (15) vers l'extérieur de celui-ci, sont connectés au réservoir (15) de telle manière que, ou dans lequel la forme du réservoir (15) est telle que, l'eau s'écoule dans le réservoir (15) à partir du côté anode vers le côté cathode.

**12.** Dispositif de chauffage de l'eau doté d'un dispositif antitartre (2) selon l'une quelconque des revendications précédentes,

dans lequel une membrane de séparation (30), qui est perméable vis-à-vis de l'eau et des ions hydrogène, mais qui est imperméable vis-à-vis du gaz oxygène, est disposée entre l'anode (12) et la cathode.

**13.** Dispositif de chauffage de l'eau doté d'un dispositif antitartre (2) selon l'une quelconque des revendications précédentes,

dans lequel des moyens de détection d'écoulement d'eau (19, 20) au moins, en particulier un détecteur d'écoulement ou un capteur de pression, destinés à détecter s'il y a ou non un écoulement d'eau dans le réservoir (15) par l'intermédiaire d'un tuyau d'approvisionnement en eau (17, 18) au moins, sont connectés de manière électrique à la source d'énergie (14), et sont configurés de façon à mettre en service la source d'énergie (14) de façon à appliquer une tension entre l'anode (12) et la cathode seulement s'il y a un écoulement d'eau dans le réservoir (15).

**14.** Dispositif de chauffage de l'eau doté d'un dispositif antitartre (2) selon l'une quelconque des revendications précédentes,

dans lequel la source de chaleur est un passage de transfert de chaleur (9) agencé sur le côté aval du dispositif antitartre (2).

**15.** Appareil qui consomme de l'eau, en particulier une pompe à chaleur air - eau, une pompe à chaleur eau - eau, une chaudière, une machine à laver ou un lave-vaisselle, comprenant un dispositif de chauffage de l'eau selon l'une quelconque des revendications précédentes.

# FIG. 1 (EMBODIMENT 1)

# FIG. 2 (EMBODIMENT 2)

EP 2 600 070 B1

# FIG. 3 (EMBODIMENT 3)

FIG. 3 (EMBODIMENT 3)

Separation membrane 30 — Electrolysis tank 15 — Degassing valve 22 — Water outlet pipe 21 — Tank 3 — Heat transfer passage 9 — Cathode 13 — 10 — 11 — Anode 12 — Power source 14 — Condenser 6 — Water supply pipe 17 — Liquid receiver 7 — Compressor 5 — Liquid receiver 4 — Water supply pipe 18 — Expansion valve 8 — Sensor 19 — Tap water — Sensor 20 — 2 — 1

EP 2 600 070 B1

# FIG. 4 (Comparison I.)

|  | Example 1 | Example 2 | Example 3 |
|---|---|---|---|
| Generation quantity of scale nuclei in solution[#] (mg as $CaCO_3$/L) | 200 | 190 | 180 |
| Hydrogen generation rate[*] (%) | 5% | 90% | 99% |
| pH at vicinity of cathode 13/13b | 10.5 | 10.6 | 10.7 |

<Common conditions>
Potential difference between anode and cathode: 12 V
Inter electrode distance: 5 mm
Ca concentration of inlet water: 120 mg/L
pH of inlet water: 6.8

Example 1: utilizing porous titanium for cathode
Example 2: utilizing a titanium plate as cathode and introducing oxygen gas to vicinity of cathode

Example 3: utilizing a titanium plate as cathode without introducing oxygen gas

(*) Ratio used for hydrogen generation among total applying current quantity

(#) Generation quantity at inlet of tank 3

EP 2 600 070 B1

# FIG. 5 (Comparison II.)

| | Example 4 (carbon basis) | Example 5 (Ti basis with membrane) | Example 1 (Ti basis, no membrane) |
|---|---|---|---|
| Generation quantity of scale nuclei in solution[#] (mg as $CaCO_3$/L) | 180 | 240 | 200 |
| Hydrogen generation rate[*] (%), | 5% | 3.5% | 5% |
| pH at vicinity of cathode 13 | 10.5 | 11.0 | 10.5 |
| Scale thickness formed at heat transfer passage 9 after ten-year operation (mm) | 2.6 | 0.05 | 0.1 |

<Common conditions>
Potential difference between anode and cathode: 12 V
Inter electrode distance: 5 mm
Ca concentration of inlet water: 120 mg/L
pH of inlet water: 6.8

(*) Ratio used for hydrogen generation among total applying current quantity
(#) Generation quantity at inlet of tank 3

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2397789 A1
- JP 3170747 A
- JP 2001317817 A
- JP 2010221102 A